(19) Europäisches Patentamt
European Patent Office
Office européen des brevets

(11) **EP 2 662 586 B1**

(12) **EUROPEAN PATENT SPECIFICATION**

(45) Date of publication and mention of the grant of the patent:
**23.06.2021 Bulletin 2021/25**

(51) Int Cl.:
***F16D 55/224*** *(2006.01)*      ***F16D 65/092*** *(2006.01)*
***F16D 69/00*** *(2006.01)*

(21) Application number: **13167034.1**

(22) Date of filing: **08.05.2013**

(54) **Disc brake pad and brake caliper device**

Scheibenbremsbelag und Bremssattelvorrichtung

Plaquette de frein à disque et dispositif d'étrier de frein

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2012 JP 2012109494**

(43) Date of publication of application:
**13.11.2013 Bulletin 2013/46**

(73) Proprietor: **Nabtesco Corporation Tokyo 102-0093 (JP)**

(72) Inventor: **Yano, Masataka Hyogo, 651-2271 (JP)**

(74) Representative: **Isarpatent Patent- und Rechtsanwälte Behnisch Barth Charles Hassa Peckmann & Partner mbB Friedrichstrasse 31 80801 München (DE)**

(56) References cited:
**JP-A- S61 248 925      US-A- 2 438 483
US-A- 2 627 322      US-A- 2 929 470
US-A- 3 135 359      US-A- 4 019 608**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 662 586 B1

**Description**

BACKGROUND OF THE INVENTION

Field of the Invention

The present invention relates to a disc brake pad that is used in a disc brake device to be disposed in a vehicle and that can be pressed against a disc disposed so as to rotate along with an axle or a wheel in the vehicle, and also relates to a brake caliper device that includes this disc brake pad.

Description of Related Art

Conventionally, a disc brake pad that can be pressed against a disc disposed so as to rotate along with an axle or a wheel is used in a disc brake device disposed in a vehicle. Wear progresses in such a disc brake pad as the use thereof continues, and the disc brake pad is replaced when the amount of wear increases to a certain extent.

However, wear in a disc brake pad is likely to progress unevenly, and partial wear is likely to occur. When partial wear occurs, the disc brake pad needs to be replaced prematurely even though there are still sufficient portions where the amount of wear is small. It is therefore desirable to realize a disc brake pad that can suppress the occurrence of partial wear.

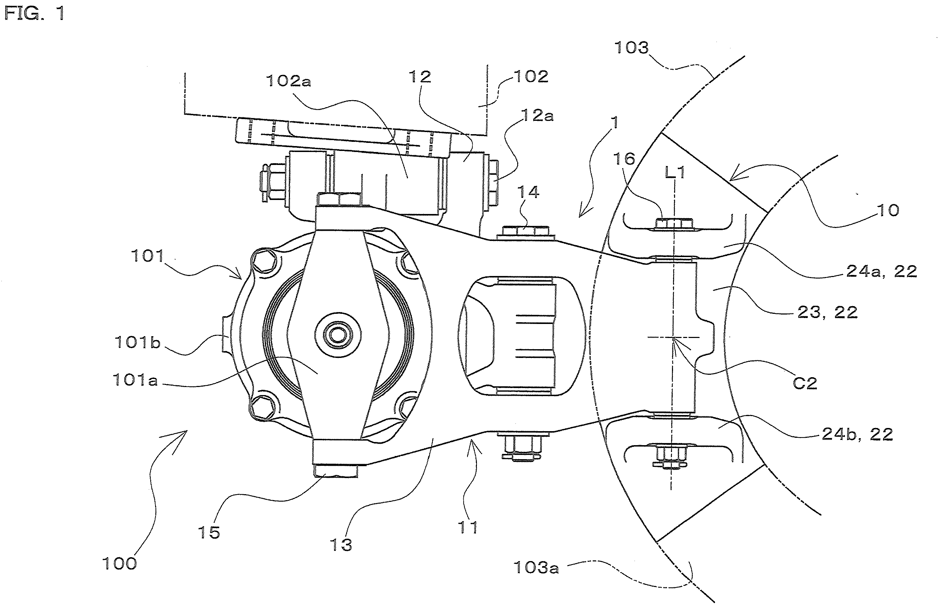

Published Japanese Translation of PCT Application No. H10-507250 (p. 5, pp. 9 to 10, FIGS. 1 to 5) discloses a disc brake pad directed to the equalization of surface pressure generated between the frictional braking face of a disc and a lining member that is pressed against the frictional braking face. The disc brake pad disclosed in Published Japanese Translation of PCT Application No. H10-507250 includes a brake lining configured by many group members (1), and a lining support member (19).

In this disc brake pad, each of the many group members (1) includes multiple lining members (3) and a support plate (7) that supports the lining members (3). Each of the lining members (3) is pivotably coupled with the support plate (7) by a complex support mechanism that uses a countersunk screw (9), a spherical cap (11), a compression coil spring (13), and a nut (15). Also, each of the support plates (7) is pivotably coupled with the lining support member (19) by a complex support mechanism that uses a screw (21), a spherical cap (23), a compression coil spring (25), and a nut (27)

Document US4019608A discloses a brake pad according to the preamble of claim 1.

SUMMARY OF THE INVENTION

By having a configuration directed to the equalization of surface pressure between the frictional braking face of the disc and the lining member, the disc brake pad disclosed in Published Japanese Translation of PCT Application No. H10-507250 aims to reduce wear and suppress the occurrence of hot cracking resulting from thermal overload. However, the occurrence of partial wear cannot be suppressed by the disc brake pad disclosed in Published Japanese Translation of PCT Application No. H10-507250.

Also, the disc brake pad disclosed in Published Japanese Translation of PCT Application No. H10-507250 requires many group members in which multiple lining members are each pivotably coupled with a support plate via a complex support mechanism. Furthermore, this disc brake pad also requires a structure in which many group members are each pivotably coupled with a lining support member via a complex support mechanism. This therefore leads to an increase in the structural complexity of the disc brake pad and an increase in the number of parts. Accordingly, it is desirable to realize a disc brake pad that can suppress the occurrence of partial wear of the disc brake pad with a simple structure, not a complex structure that disposes many lining members and support plates at a tilt.

In light of the above-described circumstances, an object of the present invention is to provide a disc brake pad that can suppress the occurrence of partial wear with a simple structure. Another object of the present invention is to provide a brake caliper device that includes this disc brake pad.

A disc brake pad according to the invention for achieving the above-described goals is a disc brake pad as defined in claim 1.

Through thorough theoretical consideration and repeated experimentation, the inventors of the present invention thoroughly verified a configuration that can suppress the occurrence of partial wear in a disc brake pad with a simple structure. As a result of such intense research, the inventors of the present invention arrived at the ability to realize a disc brake pad that, due to satisfying both of the following first and second conditions, can suppress the occurrence of partial wear with a simple structure.

The first condition is that the temperature of the frictional braking face of the disc is equalized in the braking operation in which the lining member of the disc brake pad is pressed against the frictional braking face of the disc. If unevenness of the temperature of the frictional braking face of the disc occurs, wear of the lining member will be promoted in places where the temperature is high, and partial wear will occur. Accordingly, the satisfaction of the first condition suppresses the occurrence of partial wear of the lining member resulting from unevenness in the temperature of the frictional braking face of the disc.

Also, the second condition is that the braking energy per unit area of the lining member pressed against the frictional braking face is equalized in the braking operation. The amount of wear of the lining member can be expressed as a function of the braking energy of the lining member that is pressed against the frictional braking face. Accordingly, if the second condition is satisfied, partial wear due to unevenness in the braking energy per unit area of the lining member is suppressed, and the amount of wear of the lining member is equalized.

In order for the first condition to be satisfied, the value of the heat flux of the frictional braking face of the disc needs to be equalized. Since the disc is configured as a rotating circular flat plate-shaped member, when considering a ring-like element whose dimension in the radial direction of the disc is the unit dimension, the area of this ring-like element is proportional to the radius thereof. Accordingly, in order to equalize the heat flux of the entire friction face, the frictional heat per unit time of the ring-like element needs to be proportional to the radius. On the other hand, the frictional heat (heat flow) of this element is proportional to the pressing load that the disc brake pad is subjected to and the slipping velocity. Also, since the slipping velocity of the ring-like element is proportional to the radius thereof, the frictional heat of this element is proportional to the load and the radius. Based on the above-described relationships, in order for the first condition to be satisfied, regardless of the position of the ring-like element in the radial direction of the disc, the load that the ring-like element is subjected to from the disc brake pad needs to be a constant value that is determined according to the value of the uniform heat flux of the frictional braking face, regardless of the radius of the ring-like element.

Also, in order for the second condition to be satisfied, the value of the braking energy of the disc brake pad per unit time per unit area needs to be equalized. Since the braking energy of the element on the lining member side that corresponds to the above-described ring-like element of the disc is proportional to the radius, in order to equalize the braking energy, it is necessary for the area of the lining member element to be proportional to the radius. Furthermore, the value obtained by dividing the load that the ring-like element is subjected to from the disc brake pad by the area of the lining member-side element, which is obtained as described above, is the surface pressure generated at the lining member-side element. For this reason, the surface pressure is inversely proportional to the radius of the lining member-side element.

In the disc brake pad having the above configuration, the load transfer portion is provided at a position on the base portion at which the load that generates surface pressure, which is surface pressure generated between the lining member and the frictional braking face, can act on the base portion in a manner such that the magnitude of the surface pressure is inversely proportional to the magnitude of the distance from the position of the rotational centerline of the disc in the radial direction of the disc. For this reason, according to the disc brake pad having the above configuration, the first condition and the second condition are satisfied. Accordingly, this configuration enables suppressing the occurrence of partial wear of the disc brake pad. Also, according to this configuration, it is possible to suppress the occurrence of partial wear of the disc brake pad with a simple structure, not a complex structure such as that of disc brake pads in conventional technology that cannot suppress the occurrence of partial wear, that is to say, not a complex structure in which a complex support mechanism tilts multiple lining members and support plates. Note that in the disc brake pad having the above configuration, a predetermined initial wear state occurs in the initial use state when use is started. However, according to the disc brake having the above configuration, the occurrence of partial wear is suppressed in the state after the initial wear state has passed and the stable use state has been entered.

Therefore, according to this configuration, it is possible to provide a disc brake pad that can suppress the occurrence of partial wear with a simple structure.

According to a second aspect of the disc brake pad according to the invention, the lining member can be disposed so as to spread out over a region enclosed by: an outer circumferential arc that is a portion of the lining member that extends in an arc-like manner along a circle centered about the rotational centerline and defines an outer edge portion in the radial direction of the disc, an inner circumferential arc that is a portion of the lining member that extends in an arc-like manner along a circle centered about the rotational centerline and defines an inner edge portion in the radial direction of the disc, and a pair of straight lines that are portions of the lining member that define edge portions on both sides of the outer circumferential arc and the inner circumferential arc in a circumferential direction centered about the rotational centerline, and that extend linearly along the radial direction of the disc.

According to this configuration, when the disc brake pad is used in the disc brake device, the lining member is disposed so as to spread out over a region enclosed by an outer circumferential arc and an inner circumferential arc (which are arranged concentrically with the rotational centerline of the disc), and a pair of straight lines that extend along the radial direction of the disc on respective sides of the arcs. This enables realizing the lining member for satisfying the above-described first and second conditions with a simpler structure.

According to a third aspect of the disc brake pad according to the invention, the load transfer portion can be attached so as to be able to swing relative to the caliper body via a swing shaft, and the swing shaft can be disposed in the load transfer portion so as to, relative to the lining support portion, extend in a direction that passes through a load center position, which is where the center of the load that generates the surface pressure generated between the lining member and the frictional braking face acts, intersects a direction perpendicular to the frictional braking face, is perpendicular to the radial direction of the disc, and is parallel with the frictional braking face.

According to this configuration, the swing shaft is disposed in the load transfer portion so as to extend in a direction that passes through the load center position, which is where the center of the load that generates the surface pressure satisfying the above-described first and second conditions acts, intersects a direction perpendicular to the frictional braking face, is perpendicular to the radial direction of the disc, and is parallel with the frictional braking face. For this reason, a configuration in which the load from the caliper body is transferred to the disc brake pad so as to satisfy the first condition and the second condition can be easily realized with a simple structure in which the swing shaft is disposed in a predetermined direction.

According to a fourth aspect of the disc brake pad according to the invention, the lining member is configured in a divided state and has a plurality of divided lining members that are each supported on the lining support portion.

According to this configuration, the lining member is configured so as to have multiple divided lining members. For this reason, when the lining member is manufactured, it is only necessary to manufacture small divided lining members, and it is possible to reduce the size of the mold used in lining member manufacturing and reduce the size of the manufacturing apparatus.

Also, in another aspect of the present invention, it is possible to configure a brake caliper device that includes a disc brake pad. A brake caliper device according to the invention is related to a brake caliper as defined in claim 5.

According to this configuration, it is possible to provide a brake caliper device that can suppress the occurrence of partial wear in a disc brake pad with a simple structure. Note that the vehicle rolling rotation direction refers to the rotation direction whose rotation axis direction is the traveling direction of the vehicle.

According to another aspect of the brake caliper according to the invention, the lining member can be disposed so as to spread out over a region enclosed by: an outer circumferential arc that is a portion of the lining member that extends in an arc-like manner along a circle centered about the rotational centerline and defines an outer edge portion in the radial direction of the disc, an inner circumferential arc that is a portion of the lining member that extends in an arc-like manner along a circle centered about the rotational centerline and defines an inner edge portion in the radial direction of the disc, and a pair of straight lines that are portions of the lining member that define edge portions on both sides of the outer circumferential arc and the inner circumferential arc in a circumferential direction centered about the rotational centerline, and that extend linearly along the radial direction of the disc. This configuration can achieve effects similar to those of the disc brake pad of the second invention.

According to another aspect of the brake caliper according to the invention, the load transfer portion is attached so as to be able to swing relative to the caliper body via a swing shaft, and the swing shaft can be disposed in the load transfer portion so as to, relative to the lining support portion, extend in a direction that passes through a load center position, which is where the center of the load that generates the surface pressure generated between the lining member and the frictional braking face acts, intersects a direction perpendicular to the frictional braking face, is perpendicular to the radial direction of the disc, and is parallel with the frictional braking face. This configuration can achieve effects similar to those of the disc brake pad according to the third aspect of the invention.

BRIEF DESCRIPTION OF THE DRAWINGS

FIG. 1 is a side view of a disc brake device provided with a brake caliper device and a disc brake pad according to an embodiment of the present invention;
FIG. 2 is a plan view of the disc brake device shown in FIG. 1;
FIG. 3 is a diagram schematically showing a lining member of the disc brake pad shown in FIG. 1;
FIG. 4 is a diagram showing an analytical model for describing effects of the disc brake pad shown in FIG. 1;
FIG. 5 is a diagram showing an analytical model for describing effects of the disc brake pad shown in FIG. 1;
FIG. 6 is a diagram showing an analytical model for obtaining the load center position of the disc brake pad shown in FIG. 1;
FIG. 7 is a schematic diagram showing a lining member of a disc brake pad according to a variation;
FIG. 8 is a schematic diagram showing a lining member of a disc brake pad according to another variation;
FIG. 9 is a schematic diagram showing a lining member of a disc brake pad according to yet another variation;
FIG. 10 is a schematic diagram showing a lining member of a disc brake pad according to still another variation; and
FIG. 11 is a schematic diagram showing a lining member of a disc brake pad according to still another variation.

EXEMPLARY EMBODIMENT

An embodiment for implementing the present invention will be described below with reference to the drawings. This embodiment of the present invention is widely applicable to a disc brake pad that is used in a disc brake device to be disposed in a vehicle and that can be pressed against a disc disposed so as to rotate along with an axle or a wheel in the vehicle, and also to a brake caliper device that includes this disc brake pad. Note that the following description takes the example of the case where the disc brake pad and the brake caliper device of the present embodiment are for use in a railroad vehicle.

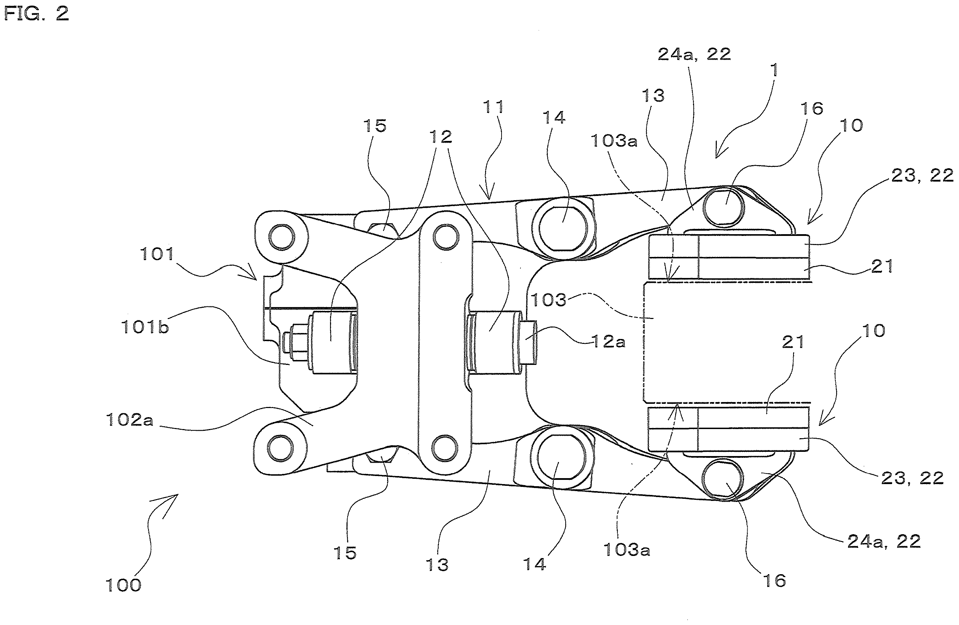

FIG. 1 is a side view of a disc brake device 100 that is provided with a brake caliper device 1 and a disc brake pad 10 according to an embodiment of the present invention, the disc brake device 100 being viewed in the axle direction. Also, FIG. 2 is a plan view of the disc brake device 100 shown in FIG. 1, as viewed from above. Note that the brake caliper device 1 of the present embodiment is configured so as to include the disc brake pad 10 of the present embodiment. Also, the disc brake device 100 is configured so as to include the brake caliper device 1.

The disc brake device 100 is disposed in a railroad vehicle, for example. FIG. 1 shows the state in which the disc brake device 100 is disposed on a vehicle body 102 (indicated by dashed double-dotted lines) serving as one part of the railroad vehicle. As shown in FIGS. 1 and 2, the disc brake device 100 is configured so as to include a brake cylinder device 101, and the brake caliper device 1.

The brake cylinder device 101 is configured as a device that is actuated by hydraulic fluid so as to move a rod (not shown) and output braking force from a brake output portion 101a that moves along with the rod. Note that when a braking operation is to be performed through the brake cylinder device 101 outputting braking force, the brake output portion 101a operates so as to extend away from a cylinder body portion 101b of the brake cylinder device 101. On the other hand, when the braking operation performed with the braking force output from the brake cylinder device 101 is to be canceled, the brake output portion 101a operates so as to retract towards the cylinder body portion 101b.

The brake caliper device 1 used in the disc brake device 100 is configured so as to include a pair of disc brake pads (10, 10), a caliper body 11 that is equipped with the brake cylinder device 101 and is attached so as to be able to rotate in the vehicle rolling rotation direction relative to the vehicle body 102, and the like. Note that the vehicle rolling rotation direction refers to the rotation direction whose rotation axis direction is the traveling direction of the vehicle. The brake caliper device 1 is configured so as to generate braking force by sandwiching a disc 103 with the pair of disc brake pads (10, 10) due to being driven by the brake cylinder device 101. For this reason, the brake caliper device 1 is provided as a device that can press the disc brake pads 10 against the disc 103.

Note that the disc 103 is disposed so as to rotate along with a wheel (not shown) or an axle (not shown) of the railroad vehicle. Also, the disc 103 is formed in the shape of a circular plate whose two faces are frictional braking faces (103a, 103a) formed so as to spread out in a direction perpendicular to the rotational centerline of the disc 103. Note that the rotational centerline of the disc 103 conforms to the central axis line of the axle of the railroad vehicle. Due to the operation of the brake cylinder device 101, the pair of disc brake pads (10, 10) of the brake caliper device 1 are pressed against the frictional braking faces (103, 103) so as to sandwich the disc 103, from both sides, along a direction parallel to the rotational centerline direction of the disc 103.

The caliper body 11 is configured so as to include a coupling member 12, a pair of brake levers (13, 13), a pair of fulcrum shafts (14, 14), a pair of cylinder support pins (15, 15), a pair of swing shafts (16, 16), and the like.

A bracket 102a is fixed to the bottom face of the vehicle body 102, and the coupling member 12 is attached to the bracket 102a via a swing pin 12a so as to be able to swing about an axis parallel to the vehicle traveling direction. The pair of brake levers (13, 13) are attached so as to be able to swing relative to the coupling member 12, in a substantially symmetrical manner, via the pair of fulcrum shafts (14, 14). When viewed from a direction parallel to the rotational centerline direction of the disc 103, the fulcrum shafts 14 are disposed so as to extend in a direction perpendicular to the axial direction of the swing pin 12a.

The pair of brake levers (13, 13) are disposed so as to extend along a direction substantially parallel to the swing pin 12a. Also, the pair of brake levers (13, 13) each have a first end side that is attached to the brake cylinder device 101 via a respective one of the pair of cylinder support pins (15, 15), and are configured such that the first end sides are driven by the brake cylinder device 101.

Note that the first end sides of the brake levers (13, 13) are attached so as to be able to swing relative to end portions of the brake cylinder device 101 via the cylinder support pins 15. Also, either one of the first end sides of the pair of brake levers (13,13) is coupled with the brake output portion 101a. The other one of the first end sides of the pair of brake levers (13, 13) is coupled to an end portion of the cylinder body portion 101b that is on the side opposite to the brake output portion 101a side.

Also, second end sides of the pair of brake levers (13,13), which are the end sides opposite to the first end sides attached to the brake cylinder device 101 with the pair of fulcrum shafts (14, 14) therebetween, are attached to the pair of disc brake pads (10,10). Also, the second end sides of the pair of brake levers (13,13) are attached to the pair of disc brake pads (10, 10) via the pair of swing shafts (16,16). Note that the disc brake pads 10 are attached so as to be able to swing relative to the second end sides of the brake levers 13 via the swing shafts 16. Also, the swing shafts 16 are disposed so as to extend in a direction parallel to the fulcrum shafts 14.

In the disc brake device 100 provided with the above-described brake caliper device 1, due to the operation of the brake cylinder device 101, the brake output portion 101a operates so as to extend away from the cylinder body portion 101b (operates in a direction of moving away from the cylinder body portion 101b) or so as to retract towards the cylinder body portion 101b (operates in the direction of moving toward the cylinder body portion 101b). Accordingly, the pair of brake levers (13, 13) are driven such that the portions thereof that are coupled to the cylinder support pins 15 move away from each other or move toward each other.

Due to being driven as described above, the brake levers 13 of the disc brake device 100 operate so as to swing about the fulcrum shafts 14. Accordingly, the pair of disc brake pads (10, 10), which are driven along with the pair of brake levers (13, 13), operate so as to sandwich the disc 103.

Also, when the above-described operations are performed, one of the pair of disc brake pads 10 attached to one of the brake levers (13, 13) comes into contact with one of the frictional braking faces 103a of the disc 103 first, for example. The other brake lever 13 then presses the other disc brake pad 10 against the other frictional braking face 103a of the disc 103 using reactive force applied by the one disc brake pad 10 that came into contact with the one frictional braking face 103a. Accordingly, the disc 103 is sandwiched by the pair of disc brake pads (10, 10), and thus frictional force is generated between the disc brake pads (10, 10) and the frictional braking faces (103a, 103a). The rotation of the disc 103 is braked by this frictional force, thus braking the rotation of the wheel of the railroad vehicle that is provided coaxially with the disc 103.

Next, the disc brake pads 10 according to an embodiment of the present invention will be described in detail. As previously mentioned, the disc brake pads 10 are used in the disc brake device 100, and are provided as mechanisms that can be pressed against the disc 103. Also, the pair of disc brake pads (10, 10) of the brake caliper device 1 are attached to the pair of brake levers (13, 13) of the caliper body 11.

The configurations of the pair of disc brake pads (10, 10) are similar to each other. For this reason, one of the disc brake pads 10 will be described in the following description, and a description will not be given for the other disc brake pad 10. Note that when the pair of disc brake pads (10, 10) are disposed on respective sides of the disc 103, they are disposed so as be in an arrangement that is symmetrical about the disc 103.

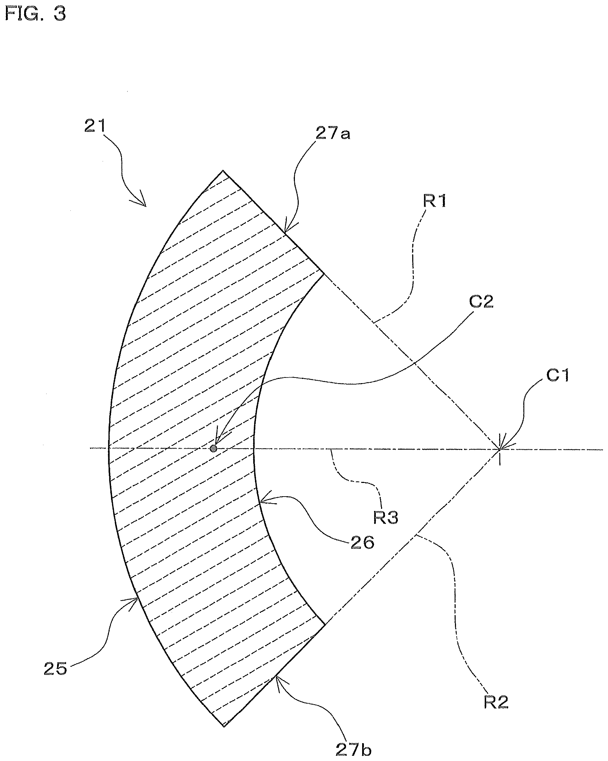

As shown in FIGS. 1 and 2, the disc brake pad 10 is configured so as to include a lining member 21 and a lining support portion 22. FIG. 3 is a diagram schematically showing the lining member 21. The lining member 21 shown in FIGS. 1 to 3 is provided as a member that can be pressed against one of the frictional braking faces 103a of the disc 103. The lining member 21 is provided as a flat plate-shaped member, and is formed using an organic material or a sintered metal material, for example.

Also, the periphery of the lining member 21, which is the periphery of the flat portion that spreads out in a flat plate shape along the planar direction, is configured by an outer circumferential arc 25, an inner circumferential arc 26, and a pair of straight lines (27a, 27b). One end side of the outer circumferential arc 25 is continuous with the straight line 27a via a bend, and the other end side is continuous with the straight line 27b via a bend. Also, one end side of the inner circumferential arc 26 is continuous with the straight line 27a via a bend, and the other end side is continuous with the straight line 27b via a bend. In other words, the periphery of the lining member 21 is configured such that a closed region making up one revolution is demarcated in a continuous manner in the order of the outer circumferential arc 25, the straight line 27a, the inner circumferential arc 26, and the straight line 27b. Also, due to having the above-described configuration, the lining member 21 is configured so as to be able to be disposed so as to spread out over a region enclosed by the outer circumferential arc 25, the inner circumferential arc 26, and the pair of straight lines (27a, 27b).

The outer circumferential arc 25 is configured as a portion of the lining member 21 that extends in an arc-like manner along a circle centered about a rotational centerline C1 of the disc 103, and that defines an outer edge portion in the radial direction of the disc 103. Note that the rotational centerline C1 of the disc 103 is schematically shown in FIG. 3 as the intersection C1 of multiple dashed dotted lines. In FIG. 3, the rotational centerline C1 is configured as a line that passes through the point C1 in this figure and extends in a direction perpendicular to the drawing.

The inner circumferential arc 26 is configured as a portion of the lining member 21 that extends in an arc-like manner along a circle centered about the rotational centerline C1 of the disc 103, and that defines an inner edge portion in the radial direction of the disc 103. For this reason, in terms of the radial direction of the disc 103, the inner circumferential arc 26 is disposed more inward than the outer circumferential arc 25 is, that is to say, more toward the rotational centerline C1 than the outer circumferential arc 25 is.

The pair of straight lines (27a, 27b) are configured as portions of the lining member 21 that define edge portions on both sides of the outer circumferential arc 25 and the inner circumferential arc 26 in a circumferential direction centered about the rotational centerline C1 of the disc 103, and that extend linearly along the radial direction of the disc 103. Note that in FIG. 3, the straight line 27a is shown as a portion that extends along a radial direction R1 of the disc 103, and the straight line 27b is shown as a portion that extends along a radial direction R2 of the disc 103.

The lining support portion 22 is provided as a structure that supports the lining member 21 and can be held so as to be able to swing relative to the brake lever 13 driven by the brake cylinder device 101 of the disc brake device 100. This lining support portion 22 is formed using an integrated metal material, for example. Also, the lining support portion 22 is biased by the brake lever 13 included in the caliper body 11, and presses the supported lining member 21 against the disc 103.

The lining support portion 22 is configured so as to include a base portion 23 and a pair of load transfer portions (24a, 24b). The pair of load transfer portions (24a, 24b) are provided so as to be integrated with the base portion 23. Note that the pair of load transfer portions (24a, 24b) do not need to be provided so as to be integrated with the base portion 23, and may be provided in the state of being fixed to the base portion 23.

The base portion 23 is provided as a flat plate-shaped portion whose periphery is formed in a shape similar to that of the lining member 21. Also, the lining member 21 is fixed to the base portion 23 on one of the two faces that spread out flatly along the planar direction. Accordingly, the base portion 23 is configured as a portion that supports the lining member 21.

The pair of load transfer portions (24a, 24b) are provided as portions capable of transferring a load from the brake lever 13 to the base portion 23. The pair of load transfer portions (24a, 24b) are also provided such that they can be attached so as to be able to swing relative to the brake lever 13 via the swing shaft 16. Note that when the disc brake pad 10 is incorporated in the brake caliper device 1, the pair of load transfer portions (24a, 24b) are attached so as to be able to swing relative to the brake lever 13 via the swing shaft 16. Also, the one load transfer portion 24a is attached so as to be able to swing relative to one end portion side of the swing shaft 16. The other load transfer portion 24b is attached so as to be able to swing relative to the other end portion side of the swing shaft 16.

When a load is transferred from the load transfer portions (24a, 24b) and the lining member 21 is pressed against the frictional braking face 103a, surface pressure is generated between the lining member 21 and the frictional braking face 103a. The load transfer portions (24a, 24b) are provided at positions on the base portion 23 at which the load that generates the surface pressure can act on the base portion 23 in a manner such that the magnitude of the surface pressure is inversely proportional to the magnitude of the distance from the position of the rotational centerline C1 of the disc 103 in the radial direction of the disc 103.

Also, the swing shaft 16 is configured so as to be able to be disposed in the load transfer portions (24a, 24b) so as to, relative to the lining support portion 22, extend along a direction L1, which is a direction intersecting a direction that passes through a load center position C2 and is perpendicular to the frictional braking face 103a. Here, the load center position C2 is the position where the center of the load that generates the aforementioned surface pressure, which is generated between the lining member 21 and the frictional braking face 103a, acts, and is a position on the friction face where the lining member 21 and the frictional braking face 103a of the disc 103 come into contact. Furthermore, the swing shaft 16 is configured so as to be able to be disposed in the load transfer portions (24a, 24b) so as to, relative to the lining support portion 22, extend along the direction L1, which is also perpendicular to a radial direction R3 of the disc 103 (the direction indicated by a dashed dotted line R3 in FIG. 3) and parallel to the frictional braking face 103a.

Note that the direction L1 in which the swing shaft 16 extends is schematically indicated by the dashed dotted line L1 in FIG. 1. Also, the position corresponding to the load center position C2 in FIG. 1 is schematically shown as the intersection C2 of multiple dashed dotted lines. Also, in FIG. 3, the load center position C2 is schematically shown as the point C2 indicated by a small circular mark.

The position of the intersection between the direction L1 in which the swing shaft 16 extends and the direction that passes through the load center position C2 and is perpendicular to the frictional braking face 103a is located at an intermediate position between the pair of load transfer portions (24a, 24b) in the direction L1 in which the swing shaft 16 extends. For this reason, when a load from the brake lever 13 acts on the pair of load transfer portions (24a, 24b) via the swing shaft 16, the lining member 21 is subjected to a load whose load center is the load center position C2 from the lining support portion 22.

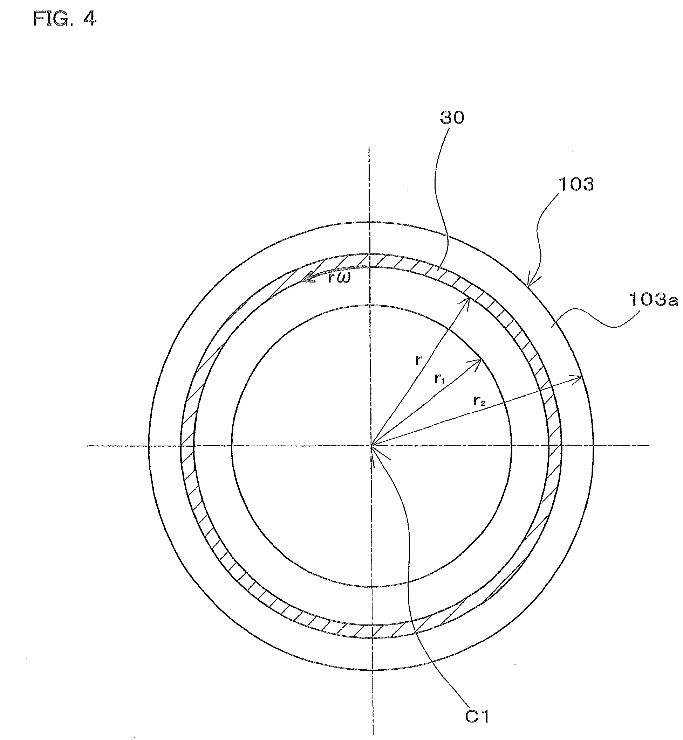

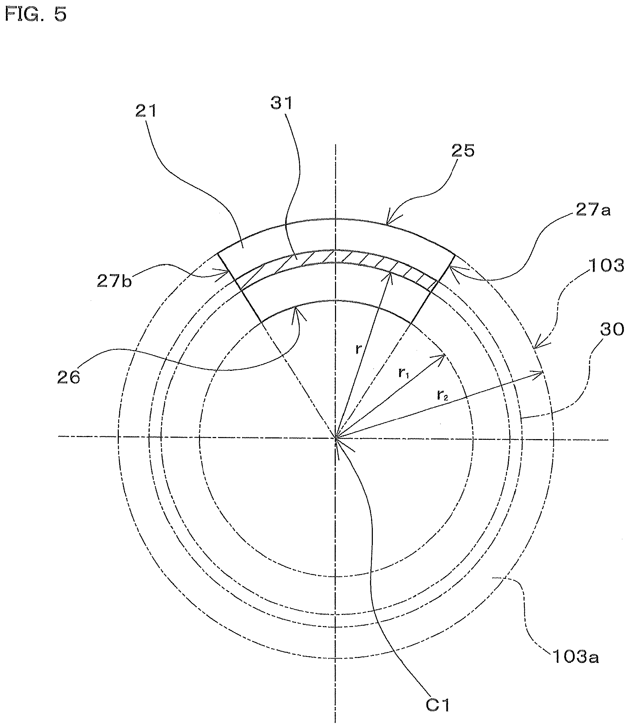

As a result of the load from the brake lever 13 acting at the load center position C2, the surface pressure between the lining member 21 and the frictional braking face 103a is ultimately generated such that its magnitude is inversely proportional to the magnitude of the distance from the position of the rotational centerline C1 of the disc 103 in the radial direction of the disc 103. Accordingly, the occurrence of partial wear in the disc brake pad 10 is suppressed. The effects of this will be described below based on analytical models shown in FIGS. 4 and 5.

Both the first and second conditions described below are satisfied by the brake caliper device 1 and the disc brake pad 10 described above. Accordingly, the occurrence of partial wear in the disc brake pad 10 is suppressed. The first condition is that the temperature of the frictional braking face 103a is equalized in the braking operation in which the lining member 21 of the disc brake pad 10 is pressed against the frictional braking face 103a of the disc 103.

If unevenness of the temperature of the frictional braking face 103a of the disc 103 occurs, wear of the lining member 21 will be promoted in places where the temperature is high, and partial wear will occur. Accordingly, the satisfaction of the first condition suppresses the occurrence of partial wear of the lining member 21 resulting from unevenness in the temperature of the frictional braking face 103a of the disc 103.

FIG. 4 shows an analytical model for describing the aforementioned first condition. In the analytical model shown in FIG. 4, the frictional braking face 103a of the disc 103 that comes into contact with the disc brake pad 10 is configured as an element that spreads out in the shape of a ring that has an outer circumferential radius $r_2$ and an inner circumferential radius $r_1$. The description of the first condition will be given using a ring-like element 30 as a ring-like element whose dimension in the radial direction of the frictional braking face 103a is a unit dimension of 1 (i.e., a unit-width ring-like element). Note that the ring-like element 30 is shown with diagonal hatching in FIG. 4. Also, the ring-like element 30 is shown in FIG. 4 as an element at a position that is a radial dimension r from the rotational centerline C1 of the disc 103.

If the first condition is satisfied, and the temperature of the frictional braking face 103a is equalized, a heat flux q (i.e., heat flow per unit area) of the frictional braking face 103a is also equalized. Accordingly, Expression 1 below holds true.

$$q = \text{const} \quad ...(1)$$

Also, a heat flow Q, which is the frictional heat per unit time generated in the ring-like element 30, is proportional to the radial dimension r from the rotational centerline C1, and Expression 2 below is obtained.

$$Q = 2\pi r q \quad ...(2)$$

Also, the heat flow Q of the ring-like element 30 is expressed by Expression 3 below due to being proportional to the load from the disc brake pad 10 and the slipping velocity. A distribution factor $\alpha$ in Expression 3 below represents the factor by which the frictional heat generated between the disc brake pad 10 and the disc 103 is distributed to the disc 103. Also, a load F in Expression 3 below represents the pressing load that the ring-like element 30 is subjected to from the disc brake pad 10, which is the load that acts in a direction perpendicular to the frictional braking face 103a. Furthermore, a friction coefficient $\mu$ in Expression 3 below represents the friction coefficient between the disc brake pad 10 and the disc 103. Moreover, an angular velocity $\omega$ in Expression 3 below represents the angular velocity of the disc 103. Accordingly, the slipping velocity of the ring-like element 30 is $r\omega$.

$$Q = \mu F r \omega \alpha \quad ...(3)$$

Expression 4 below is obtained from Expressions 2 and 3.

$$F = 2\pi q / (\mu \omega \alpha) = \text{const} \quad ...(4)$$

According to Expression 4, if the first condition is satisfied, the load F that the ring-like element 30 is subjected to from the disc brake pad 10 is constant regardless of the position of the radial dimension r from the rotational centerline C1. Accordingly, if the first condition is satisfied, regardless of the position of the ring-like element 30 in the radial direction of the disc 103, the load F is a constant value that is determined according to the value of the uniform heat flux q of the frictional braking face 103a, regardless of the radius of the ring-like element 30.

The following describes the second condition that is to be satisfied in addition to the first condition. The second condition is that the braking energy per unit area of the lining member 21 pressed against the frictional braking face 103a is equalized in the braking operation. The amount of wear of the lining member 21 is a function of the braking energy of the lining member 21 that is pressed against the frictional braking face 103a. Accordingly, if the second condition is satisfied, unevenness in the braking energy per unit area of the lining member 21 is suppressed, and the amount of wear of the lining member 21 is equalized. This suppresses the occurrence of partial wear of the lining member 21.

FIG. 5 shows an analytical model for describing the aforementioned second condition. In the analytical model shown in FIG. 5, the frictional braking face 103a is indicated by dashed double-dotted lines, and is configured as an element shaped as a ring having the outer circumferential radius $r_2$ and the inner circumferential radius $r_1$, similarly to the analytical model shown in FIG. 4. Also, in the analytical model shown in FIG. 5, the lining member 21 of the disc brake pad 10 is configured as an element that spreads out over a region enclosed by the outer circumferential arc 25 at the radius $r_2$, the inner circumferential arc 26 at the radius $r_1$, and the pair of straight lines (27a, 27b).

The description of the second condition based on the analytical model shown in FIG. 5 will be given using a lining member-side element 31, which is an element that corresponds to the above-described ring-like element 30 and is on the lining member 21 side of the disc brake pad 10. Note that the lining member-side element 31 is shown with diagonal hatching in FIG. 5. Also, the lining member-side element 31 arranged at a position for coming into contact with the ring-like element 30 is shown in FIG. 5 as an element at a position that is a radial dimension r from the rotational centerline C1 of the disc 103, similarly to the ring-like element 30.

If the second condition is satisfied, the value of braking energy E of the disc brake pad 10 per unit time per unit area is equalized. Accordingly, Expression 5 below holds true.

$$E = const \quad ...(5)$$

An area S of the lining member-side element 31 that corresponds to the ring-like element 30 is obtained by dividing the braking energy generated by the ring-like element 30 and the lining member-side element 31, which is the braking energy generated in proportion to the radial dimension r thereof, by the above-described braking energy E. Note that the braking energy generated in proportion to the radial dimension r of the ring-like element 30 and the lining member-side element 31 is obtained as the heat flow Q, which is the frictional heat per unit time, in Expression 2. Accordingly, the area S is expressed by Expression 6 below.

$$S = Q/E = 2\pi r q/E \quad ...(6)$$

Furthermore, the value obtained by dividing the load F that the ring-like element 30 is subjected to from the disc brake pad 10 by the area S of the lining member-side element 31, which is obtained as described above, is the surface pressure p generated at the lining member-side element 31. Specifically, Expression 7 below is obtained from Expressions 4 and 6.

$$p = F/S = E/(\mu \omega \alpha r) \quad ...(7)$$

According to Expressions 6 and 7, if the second condition is satisfied in addition to the first condition, the area S is proportional to the radial dimension r, and the magnitude of the surface pressure p is inversely proportional to the radial dimension r of the lining member-side element 31.

Accordingly, with the brake caliper device 1 and the disc brake pad 10, the load transfer portions (24a, 24b) are provided at positions on the base portion 23 at which the load F that generates the surface pressure p can act on the base portion 23 in a manner such that the magnitude of the surface pressure p, which is generated between the lining member 21 and the frictional braking face 103a, is inversely proportional to the magnitude of the distance from the position of the rotational centerline C1 of the disc 103 in the radial direction of the disc 103. For this reason, with the brake caliper device 1 and the disc brake pad 10, the relationship shown in Expression 7 holds true, and the first and second conditions described above are satisfied. Accordingly, the present embodiment enables suppressing the occurrence of partial wear of the disc brake pad 10. Also, according to the present embodiment, it is possible to suppress the occurrence of partial wear of the disc brake pad 10 with a simple structure, not a complex structure such as that of disc brake pads in conventional technology that cannot suppress the occurrence of partial wear, that is to say, not a complex structure in which a complex support mechanism tilts multiple lining members and support plates.

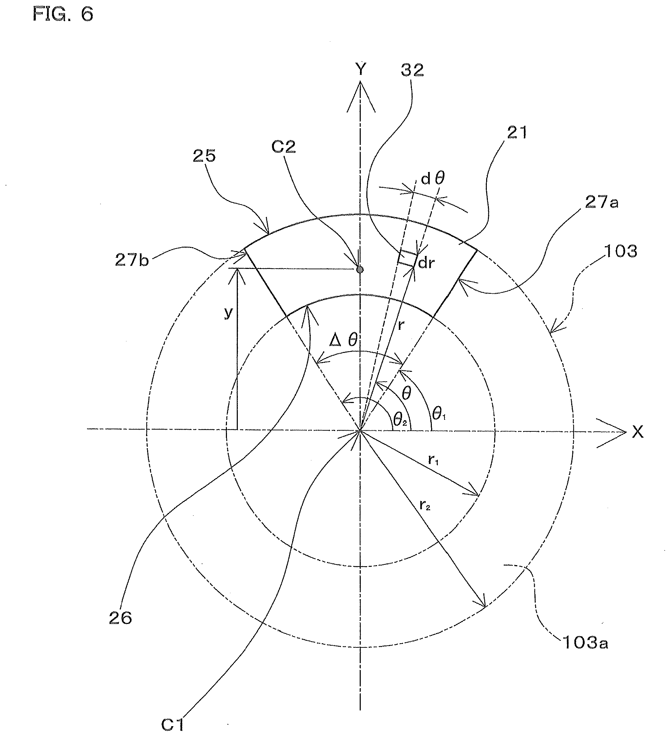

The following describes the load center position C2, which is the position where the lining member 21 of the disc brake pad 10 is subjected to the center of the load, which is the total surface pressure p. FIG. 6 is a diagram showing an analytical model for obtaining the load center position C2. In the analytical model shown in FIG. 6, the frictional braking face 103a is indicated by dashed double-dotted lines, and is configured as an element shaped as a ring having the outer circumferential radius $r_2$ and the inner circumferential radius $r_1$, similarly to the analytical models shown in FIGS. 4 and 5. Also, in the analytical model shown in FIG. 6, the lining member 21 is configured as an element that spreads out over a region enclosed by the outer circumferential arc 25 at the radius $r_2$, the inner circumferential arc 26 at the radius $r_1$, and the pair of straight lines (27a, 27b), similarly to the analytical model shown in FIG. 5.

Also, in the analytical model shown in FIG. 6, the X axis and the Y axis are respectively set as the horizontal axis and the vertical axis that intersect at the rotational centerline C1. The Y axis is set so as to pass through the centerline in the circumferential direction of the lining member 21. In other words, the Y axis is set so as to pass through the position that bisects the surface area of the lining member 21. Also, a point C2 indicated by a small circle in FIG. 6 shows the load center position C2, which is the position where the lining member 21 is subjected to the center of the load, which is the total surface pressure p.

The load center position C2 indicated by the point C2 in FIG. 6 is located on the Y axis. The load center position coordinate y, which is the Y coordinate of the load center position, is the distance of the load center position from the rotational centerline C1. The load center position C2 of the lining member 21, which is specified by the load center position coordinate y, is the position where the center of the load, which is the total load F that generates the above-described surface pressure p (i.e., total surface pressure p), acts. The following describes arithmetic processing for obtaining the load center position coordinate y.

In the description of the arithmetic processing for obtaining the load center position coordinate y, a microelement 32 is set on the surface of the lining member 21. The microelement 32 is set as an element at a position that is the radial dimension r from the rotational centerline C1 of the disc 103, and that is at an angle $\theta$ in the counterclockwise direction relative to the X axis extending in the positive direction from the position of the rotational centerline C1. Also, the microelement 32 is set as a microelement whose length in the diameter direction is dr, and that spreads out over the angle d$\theta$ in the circumferential direction. Note that an angle $\theta_1$ is set as the angle relative to the X-axis positive direction in the direction in which the straight line 27a is located, which is the radial direction of the disc 103. Also, note that an angle $\theta_2$ is set as the angle relative to the X-axis positive direction in the direction in which the straight line 27b is located, which is the radial direction of the disc 103.

In order to obtain the load center position coordinate y, first, a moment M about the X axis due to the surface pressure p generated between the surface of the lining member 21 and the frictional braking face 103a is calculated. This moment M is obtained by solving Expression 8 below.

$$M = \int_S p \, y \, d S = \int_{r_1}^{r_2} \int_{\theta_1}^{\theta_2} a \, r \sin \theta \, d \theta \, d r \quad \cdots (8)$$

Also, dS, the surface pressure p, and the load center position coordinate y are each expressed in Expression 9 shown below. Note that although the surface pressure p is obtained using the aforementioned Expression 7, it is expressed in Expression 8 as a constant a in the constant term portion other than the radial dimension r in the aforementioned Expression 7, as shown in Expression 9. Also, Expression 10 shown below is obtained by solving Expression 8.

$$d S = r \, d \theta \, d r 、 p = a / r 、 y = r \sin \theta \quad \cdots (9)$$

$$M = a \, (r_2^2 - r_1^2) \cdot \sin \frac{\theta_2 - \theta_1}{2} \quad \cdots (10)$$

On the other hand, a load $F_A$, which is also the total surface pressure p and the aforementioned total load F, is obtained by solving Expression 11 below. Also, Expression 12 shown below is obtained when Expression 11 is solved.

$$F_A = \int_S p \, d S = \int_{r_1}^{r_2} \int_{\theta_1}^{\theta_2} a \, d \theta \, d r \quad \cdots (11)$$

$$F_A = a \, (r_2 - r_1) \cdot (\theta_2 - \theta_1) \quad \cdots (12)$$

Accordingly, the load center position coordinate y is obtained by Expression 13 below.

$$y = \quad M/F_A =$$
$$(r_2 + r_1) / (\theta_2 - \theta_1) \cdot \sin \frac{\theta_2 - \theta_1}{2} \quad \cdots (13)$$

Here, Expression 14 below is obtained when Expression 13 is written using the spread angle $\Delta\theta$ in the circumferential direction of the lining member 21 (see FIG. 6), that is to say the spread angle $\Delta\theta$ obtained by subtracting the angle $\theta_1$ from the angle $\theta_2$.

$$y = (r_2 + r_1) / \Delta \theta \cdot \sin \frac{\Delta \theta}{2} \quad \cdots (14)$$

The load center position coordinate y is specified by Expression 14 shown above. In the brake caliper device 1 and the disc brake pad 10, the positions of the load transfer portions (24a, 24b) on the base portion 23 are set such that the swing shaft 16 intersects a direction that passes through the load center position C2, which is specified by the load center position coordinate y, and is perpendicular to the frictional braking face 103a. Note that as shown by the load center position coordinate y shown in Expression 14, the load center position C2, which is the position where the center of the load $F_A$ acts, is farther on the inner diameter side (on the rotational centerline C1 side) in the radial direction than the centroid of the surface of the lining member 21 is.

As described above, according to the present embodiment, it is possible to provide disc brake pads 10 that can suppress the occurrence of partial wear with a simple structure, and a brake caliper device 1 that includes these disc brake pads 10.

Also, according to the present embodiment, when the disc brake pads 10 are used in the disc brake device 100, the lining member 21 is disposed so as to spread out over a region enclosed by the outer circumferential arc 25 and the inner circumferential arc 26 (which are arranged concentrically with the rotational centerline C1 of the disc 103), and the pair of straight lines (27a, 27b) that extend along the radial direction of the disc 103 on respective sides of the arcs 25 and 26. This enables realizing the lining member 21 for satisfying the above-described first and second conditions with a simpler structure.

Also, according to the present embodiment, the swing shaft 16 is disposed in the load transfer portions (24a, 24b) so as to extend in a direction that passes through the load center position C2, which is where the center of the load $F_A$ that generates the surface pressure p satisfying the above-described first and second conditions acts, intersects a direction perpendicular to the frictional braking face, is perpendicular to the radial direction of the disc 103, and is parallel with the frictional braking face 103a. For this reason, a configuration in which the load of the brake levers 13 is transferred to the disc brake pads 10 so as to satisfy the first condition and the second condition can be easily realized with a simple structure in which the swing shafts 16 are disposed in a predetermined direction.

Although an embodiment of the present invention has been described above, the present invention is not intended to be limited to the above-described embodiment, and the present invention can be implemented with various changes within the range recited in the claims. For example, variations such as the following can be implemented.

(1) The mode of the load transfer portions is not limited to the mode described as an example in the above embodiment, and can be implemented with various changes. Although the above-described embodiment describes an example of the mode in which the load transfer portion is provided at two locations on the lining support portion, a mode may be implemented in which the load transfer portion is provided at one location or three or more locations on the lining support portion. In other words, the arrangement and number of load transfer portions may be changed in various manners as long as the mode is such that the center of the load acts in the same load centerline direction as that in the above-described embodiment.

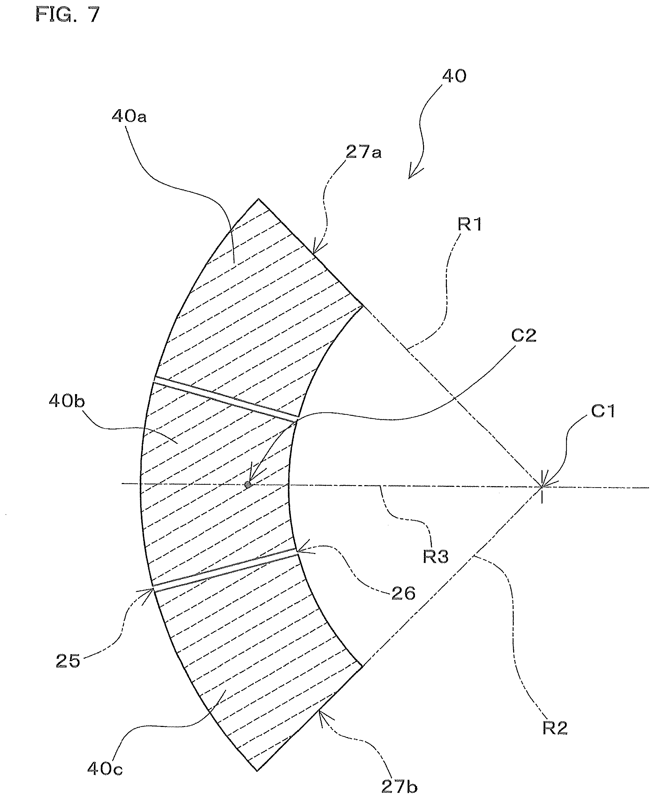

(2) The shape of the lining member is not limited to the shape described as an example in the above embodiment, and can be implemented with various changes. FIGS. 7 to 9 are diagrams schematically showing lining members (40, 41, 42) according to variations. Note that FIGS. 7 to 9 show states that correspond to that in FIG. 3. Also, in the following description of the variations shown in FIGS. 7 to 9, configurations that are similar to those in the above-described embodiment are given the same reference signs in the figures or described using the same names and reference signs, and redundant descriptions will not be given for such configurations.

The lining member 40 shown in FIG. 7 is configured in a divided state and has multiple divided lining members (40a, 40b, 40c) that are each supported on a lining support portion 22. In other words, the lining member 40 is configured so as to have three divided lining members (40a, 40b, 40c).

The three divided lining members (40a, 40b, 40c) have been divided along the circumferential direction of a circle centered about the rotational centerline C1. Also, the three divided lining members (40a, 40b, 40c) are supported by being attached to the lining support portion 22 in the state of being aligned in order along the circumferential direction of the circle centered about the rotational centerline C1.

Also, the lining member 40 having the three divided lining members (40a, 40b, 40c) is configured so as to be able to be disposed so as to spread out over a region that corresponds to a region enclosed by the outer circumferential arc 25, the inner circumferential arc 26, and the pair of straight lines (27a, 27b) in the above-described embodiment. Note that in FIG. 7, dashed double-dotted lines indicate positions corresponding to the outer circumferential arc 25, the inner circumferential arc 26, and the pair of straight lines (27a, 27b) in the above-described embodiment.

Also, the divided lining members (40a, 40b, 40c) each have an outer edge portion with respect to the radial direction of the disc 103 that is formed in the shape of an arc that extends along the outer circumferential arc 25, and an inner edge portion with respect to the radial direction of the disc that is formed in the shape of an arc that extends along the inner circumferential arc 26. Also, the divided lining members (40a, 40b, 40c) each have edge portions between the outer edge portion and the inner edge portion that are formed in a shape that extends linearly along the radial direction of the disc 103.

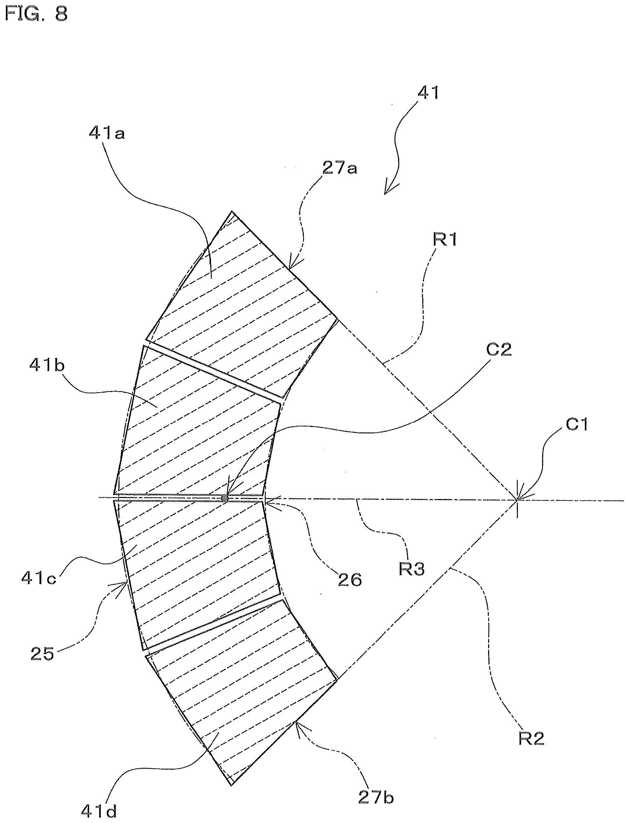

The lining member 41 shown in FIG. 8 is configured in a divided state and has multiple divided lining members (41a, 41b, 41c, 41d) that are each supported on a lining support portion 22. In other words, the lining member 41 is configured so as to have four divided lining members (41a, 41b, 41c, 41d).

The four divided lining members (41a, 41b, 41c, 41d) have been divided along the circumferential direction of a circle centered about the rotational centerline C1. Also, the four divided lining members (41a, 41b, 41c, 41d) are supported by being attached to the lining support portion 22 in the state of being aligned in order along the circumferential direction of the circle centered about the rotational centerline C1.

Also, the lining member 41 having the four divided lining members (41a, 41b, 41c, 41d) is configured so as to be able to be disposed so as to spread out over a region that corresponds to a region enclosed by the outer circumferential arc 25, the inner circumferential arc 26, and the pair of straight lines (27a, 27b) in the above-described embodiment. Note that in FIG. 8, dashed double-dotted lines indicate positions corresponding to the outer circumferential arc 25, the inner circumferential arc 26, and the pair of straight lines (27a, 27b) in the above-described embodiment.

Also, the divided lining members (41a, 41b, 41c, 41d) each have an outer edge portion with respect to the radial direction of the disc 103 that is formed in a shape that extends linearly along a direction that is orthogonal to a predetermined radial direction of the disc 103 at a position in the vicinity of the outer circumferential arc 25. Furthermore, the divided lining members (41a, 41b, 41c, 41d) each have an inner edge portion with respect to the radial direction of the disc that is formed in a shape that extends linearly along a direction that is orthogonal to a predetermined radial direction of the disc 103 at a position in the vicinity of the inner circumferential arc 26. Moreover, the divided lining members (41a, 41b, 41c, 41c) each have edge portions between the outer edge portion and the inner edge portion that are formed in a shape that extends linearly along the radial direction of the disc 103. In other words, the divided lining members (41a, 41b, 41c, 41d) are formed such that the outer shape of the edge portions thereof is a trapezoid.

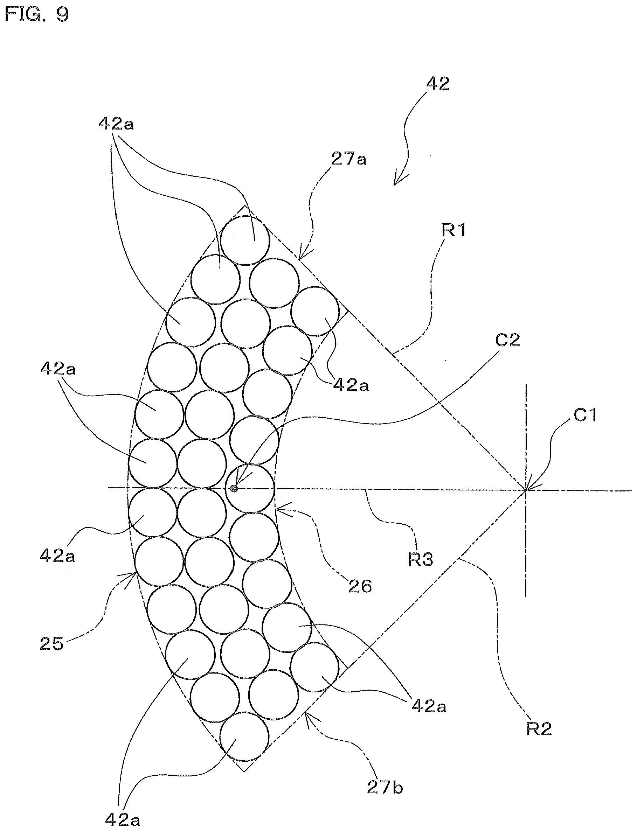

The lining member 42 shown in FIG. 9 is configured in a divided state and has multiple divided lining members 42a that are each supported on a lining support portion 22. Many divided lining members 42a are provided, and FIG. 9 shows an example of a mode in which 31 divided lining members 42a are provided.

The divided lining members 42a are each provided as a circular plate member having a circular outer shape, and more specifically, are provided as circular plate members having a sufficiently small radial dimension such that many of them can be disposed on the lining support portion 22. The divided lining members 42a are supported by being attached to the lining support portion 22.

Also, the lining member 42 having the divided lining members 42a is configured so as to be able to be disposed so as to spread out over a region that corresponds to a region enclosed by the outer circumferential arc 25, the inner circumferential arc 26, and the pair of straight lines (27a, 27b) in the above-described embodiment. Note that in FIG. 9, dashed double-dotted lines indicate positions corresponding to the outer circumferential arc 25, the inner circumferential arc 26, and the pair of straight lines (27a, 27b) in the above-described embodiment.

The lining members (40, 41, 42) according to all of the above-described variations are configured such that the center of the load from the load transfer portion acts at the load center position C2. Similarly to the above-described embodiment, the above-described variations also make it possible to provide a disc brake pad that can suppress the occurrence of partial wear with a simple structure.

Also, according to the above-described variations, the lining members (40, 41, 42) are configured so as to have multiple divided lining members. For this reason, when the lining members (40, 41, 42) are manufactured, it is only necessary to manufacture small divided lining members, and it is possible to reduce the size of the mold used in lining member (40, 41, 42) manufacturing and reduce the size of the manufacturing apparatus. Note that the shape and number of divided lining members described in the variations shown in FIGS. 7 to 9 are merely examples, and may be implemented with other changes.

(3) The shape of the lining member may be further changed in various ways within the range recited in the claims. For example, the lining member does not need to be disposed so as to spread out over a region enclosed by an outer circumferential arc, an inner circumferential arc, and a pair of straight lines.

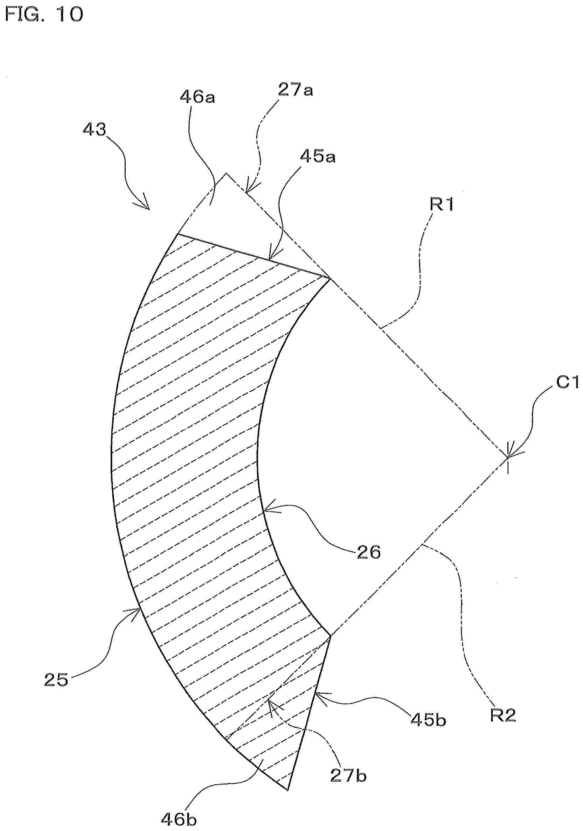

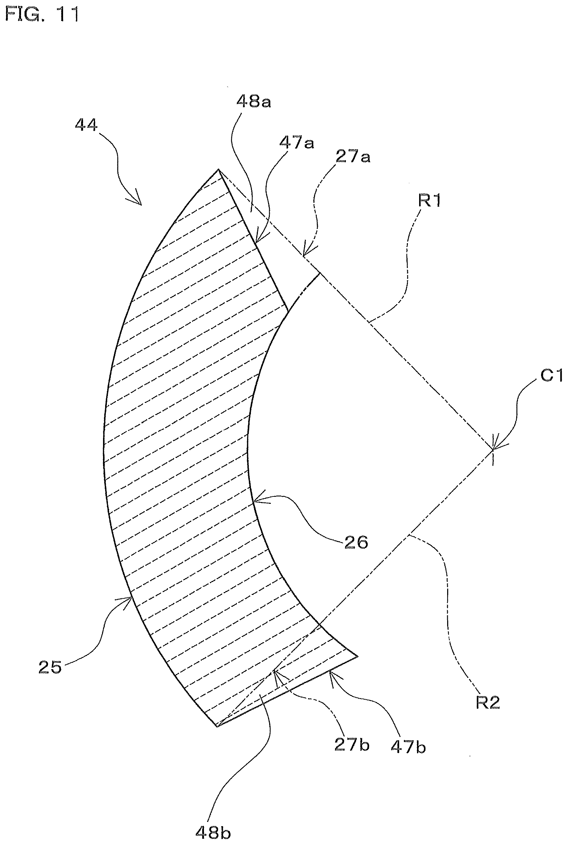

FIGS. 10 and 11 are diagrams schematically showing lining members (43, 44) according to variations. Note that FIGS. 10 and 11 show a state corresponding to that in FIG. 3. Also, in the following description of the variations shown in FIGS. 10 and 11, configurations that are similar to those in the above-described embodiment are given the same reference signs in the figures or described using the same names and reference signs, and redundant descriptions will not be given for such configurations.

The lining member 43 shown in FIG. 10 is provided with an outer circumferential arc 25 and an inner circumferential arc 26 similarly to the lining member 21 of the above-described embodiment. However, the lining member 43 is not provided with a pair of straight lines (27a, 27b), but rather is provided with a pair of edges (45a, 45b).

One end side of the outer circumferential arc 25 is continuous with the edge 45a via a bend, and the other end side is continuous with the edge 45b via a bend. Also, one end side of the inner circumferential arc 26 is continuous with the edge 45a via a bend, and the other end side is continuous with the edge 45b via a bend. In other words, the periphery of the lining member 43 is configured such that a closed region making up one revolution is demarcated in a continuous manner in the order of the outer circumferential arc 25, the edge 45a, the inner circumferential arc 26, and the edge 45b. Also, due to having the above-described configuration, the lining member 43 is configured so as to be able to be disposed so as to spread out over a region enclosed by the outer circumferential arc 25, the inner circumferential arc 26, and the pair of edges (45a, 45b).

The pair of edges (45a, 45b) are configured as portions of the lining member 43 that define edge portions on both sides of the outer circumferential arc 25 and the inner circumferential arc 26 in the direction of the circles centered about the rotational centerline C1 of the disc 103. However, unlike the pair of straight lines (27a, 27b) in the above-described embodiment, the pair of edges (45a, 45b) are configured as portions that extend in a direction that is offset from the radial direction of the disc 103. Note that positions corresponding to the pair of straight lines (27a, 27b) of the above-described embodiment are indicated by dashed double-dotted lines in FIG. 10.

Also, the pair of edges (45a, 45b) are provided so as to extend linearly. The edge 45a is configured so as to extend in a direction according to which the distance from the straight line 27a indicated by a dashed double-dotted line increases from the inner circumferential arc 26 side to the outer circumferential arc 25 side. Similarly, the edge 45b is configured so as to extend in a direction according to which the distance from the straight line 27b indicated by a dashed double-dotted line increases from the inner circumferential arc 26 side to the outer circumferential arc 25 side.

Also, in this configuration, the area of the region enclosed by the outer circumferential arc 25, the inner circumferential arc 26, and the pair of edges (45a, 45b) on the lining member 43 is the same as the area of the region enclosed by the outer circumferential arc 25, the inner circumferential arc 26, and the pair of straight lines (27a, 27b) on the lining member 21. In other words, in this configuration of the lining member 43, the area of a region 46a outward of the edge 45a is the same as the area of a region 46b inward of the edge 45b. Note that the region 46a is configured as the region enclosed by the straight line 27a and an extension line of the outer circumferential arc 25, which are indicated by dashed double-dotted lines, as well as the edge 45a. On the other hand, the region 46b is configured as the region enclosed by part of the outer circumferential arc 25, the straight line 27b indicated by a dashed double-dotted line, and the edge 45b.

The lining member 44 shown in FIG. 11 is provided with an outer circumferential arc 25 and an inner circumferential arc 26 similarly to the lining member 21 of the above-described embodiment. However, the lining member 44 is not provided with a pair of straight lines (27a, 27b), but rather is provided with a pair of edges (47a, 47b).

One end side of the outer circumferential arc 25 is continuous with the edge 47a via a bend, and the other end side is continuous with the edge 47b via a bend. Also, one end side of the inner circumferential arc 26 is continuous with the edge 47a via a bend, and the other end side is continuous with the edge 47b via a bend. In other words, the periphery of the lining member 44 is configured such that a closed region making up one revolution is demarcated in a continuous manner in the order of the outer circumferential arc 25, the edge 47a, the inner circumferential arc 26, and the edge 47b. Also, due to having the above-described configuration, the lining member 44 is configured so as to be able to be disposed so as to spread out over a region enclosed by the outer circumferential arc 25, the inner circumferential arc 26, and the pair of edges (47a, 47b).

The pair of edges (47a, 47b) are configured as portions of the lining member 44 that define edge portions on both sides of the outer circumferential arc 25 and the inner circumferential arc 26 in the direction of the circles centered about the rotational centerline C1 of the disc 103. However, unlike the pair of straight lines (27a, 27b) in the above-described embodiment, the pair of edges (47a, 47b) are configured as portions that extend in a direction that is offset from the radial direction of the disc 103. Note that positions corresponding to the pair of straight lines (27a, 27b) of the above-described embodiment are indicated by dashed double-dotted lines in FIG. 11.

Also, the pair of edges (47a, 47b) are provided so as to extend linearly. The edge 47a is configured so as to extend in a direction according to which the distance from the straight line 27a indicated by a dashed double-dotted line decreases from the inner circumferential arc 26 side to the outer circumferential arc 25 side. Similarly, the edge 47b is configured so as to extend in a direction according to which the distance from the straight line 27b indicated by a dashed double-dotted line decreases from the inner circumferential arc 26 side to the outer circumferential arc 25 side.

Also, in this configuration, the area of the region enclosed by the outer circumferential arc 25, the inner circumferential arc 26, and the pair of edges (47a, 47b) on the lining member 44 is the same as the area of the region enclosed by the outer circumferential arc 25, the inner circumferential arc 26, and the pair of straight lines (27a, 27b) on the lining member 21. In other words, in this configuration of the lining member 44, the area of a region 48a outward of the edge 47a is the same as the area of a region 48b inward of the edge 47b. Note that the region 48a is configured as the region enclosed by the straight line 27a and an extension line of the outer circumferential arc 25, which are indicated by dashed double-dotted lines, as well as the edge 47a. On the other hand, the region 48b is configured as the region enclosed by part of the outer circumferential arc 25, the straight line 27b indicated by a dashed double-dotted line, and the edge 47b.

Even with disc brake pads that include the lining members (43, 44) of the above-described variations, it is possible to suppress the occurrence of partial wear with a simple configuration, similarly to the above-described embodiment. Note that although the variations shown in FIGS. 10 and 11 described examples where the lining members are shaped such that the edges connecting the outer circumferential arc and the inner circumferential arc extend along one straight line, this is not required. A mode is possible in which the edges connecting the outer circumferential arc and the inner circumferential arc extend with a bend, and a mode is possible in which they extend in a curved manner.

INDUSTRIAL APPLICABILITY

The present invention is widely applicable to a disc brake pad that is used in a disc brake device to be disposed in a vehicle and that can be pressed against a disc disposed so as to rotate along with an axle or a wheel in the vehicle, and also to a brake caliper device that includes this disc brake pad.

**Claims**

1.  A disc brake pad (10) that is used in a disc brake device (100) to be disposed in a vehicle and that is adapted to be pressed against a disc (103) disposed so as to rotate along with one of an axle and a wheel in the vehicle, the disc brake pad (10) comprising:

    a lining member (21; 40; 41; 42; 43; 44) that is adapted to be pressed against a frictional braking face (103a) of the disc (103); and
    a lining support portion (22) that is adapted to support the lining member (21; 40; 41; 42; 43; 44) and is adapted to be held so as to be able to swing relative to a caliper body (11) that is adapted to be driven by a brake cylinder device (101) of the disc brake device (100),
    wherein the lining support portion (22) is provided with a base portion (23) that is adapted to support the lining member (21; 40; 41; 42; 43; 44),
    and a load transfer portion (24a, 24b) that is provided to be integrated with or fixed to the base portion (23) and is adapted to transfer a load from the caliper body (11) to the base portion (23),
    and the load transfer portion (24a, 24b) is provided at a position on the base portion (23) at which a load that generates surface pressure, which is surface pressure generated between the lining member (21; 40; 41; 42; 43; 44) and the frictional braking face (103a) when the lining member (21; 40; 41; 42; 43; 44) is pressed against the frictional braking face (103a), is adapted to act on the base portion (23) in a manner such that a magnitude of the surface pressure is inversely proportional to a magnitude of a distance from a position of a rotational centerline of the disc (103) in a radial direction of the disc (103), **characterized in that**
    the disk brake pad (10) is configured such that the load (F) acting from the disk brake pad (10) on a ring-like element (30) of the disk (103), whose dimension in the radial direction of the disk (103) is a unit dimension, is constant regardless of the position of the ring-like element (30) in the radial direction of the disk (103) from the rotation centerline (C1) of the disk (103), and wherein
    the area of a lining member-side element (31) of the lining member (21), whose dimension in the radial direction of the disk (103) is a unit dimension, is proportional to the radial dimension (r) of the lining member-side element (31) from the rotation centerline (C1) of the disk (103).

2.  The disc brake pad (10) according to claim 1, wherein the lining member (21; 40; 41; 42) is adapted to be disposed so as to spread out over a region enclosed by: an outer circumferential arc (25) that is a portion of the lining member (21; 40; 41; 42) that extends in an arc-like manner along a circle centered about the rotational centerline and defines an outer edge portion in the radial direction of the disc (103), an inner circumferential arc (26) that is a portion of the lining member (21; 40; 41; 42) that extends in an arc-like manner along a circle centered about the rotational centerline and defines an inner edge portion in the radial direction of the disc (103), and a pair of straight lines (27a, 27b) that are portions of the lining member (21; 40; 41; 42) that define edge portions on both sides of the outer circumferential arc (25) 10 and the inner circumferential arc (26) in a circumferential direction centered about the rotational centerline, and that extend linearly along the radial direction of the disc (103).

3.  The disc brake pad (10) according to claim 2, wherein the load transfer portion (24a, 24b) is adapted to be attached so as to be able to swing relative to the caliper body (11) via a swing shaft (16), and the swing shaft (16) is adapted to be disposed in the load transfer portion (24a, 24b) so as to, relative to the lining support portion (22), extend in a direction that passes through a load center position, which is where the center of the load that generates the surface pressure generated between the lining member (21; 40; 41; 42) and the frictional braking face (103a) acts, intersects a direction perpendicular to the frictional braking face (103a), is perpendicular to the radial direction of the disc (103), and is parallel with the frictional braking face (103a).

4. The disc brake pad (10) according to any one of claims 1 to 3, wherein the lining member (40; 41; 42) is configured in a divided state and has a plurality of divided lining members (40a, 40b, 40c; 41a, 41b, 41c, 41d; 42a) that are each supported on the lining support portion (22).

5. A brake caliper device (1) that is used in a disc brake device (100) to be disposed in a vehicle and that is adapted to press a disc brake pad (10) against a disc (103) disposed so as to rotate along with one of an axle and a wheel in the vehicle, the brake caliper device (I) comprising:

a caliper body (11) that is equipped with a brake cylinder device (101) in the disc brake device (100), is to be attached so as to be able to rotate in a vehicle rolling rotation direction relative to the vehicle, and generates braking force by sandwiching the disc (103) with a pair of the disc brake pads (10) due to being driven by the brake cylinder device (101); and
the pair of disc brake pads (10) that are attached to the caliper body (11),
wherein the disc brake pads (10) each have a lining member (21; 40; 41; 42;43; 44) that is adapted to be pressed against a frictional braking face (103a) of the disc (103), and a lining support portion (22) that is adapted to support the lining member (21; 40; 41; 42; 43; 44) and is adapted to be held so as to be able to swing relative to the caliper body (11),
the lining support portion (22) is provided with a base portion (23) that is adapted to support the lining member (21; 40; 41; 42; 43; 44), and a load transfer portion (24a, 24b) that is provided to be integrated with or fixed to the base portion (23) and is adapted to transfer a load from the caliper body (11) to the base portion (23),
and the load transfer portion (24a, 24b) is provided at a position on the base portion (23) at which a load that generates surface pressure, which is surface pressure generated between the lining member (21; 40; 41; 42; 43; 44) and the frictional braking face (103a) when the lining member (21; 40; 41; 42; 43; 44) is pressed against the frictional braking face (103a), is adapted to act on the base portion (23) in a manner such that a magnitude of the surface pressure is inversely proportional to a magnitude of a distance from a position of a rotational centerline of the disc (103) in a radial direction of the disc (103), **characterized in that**
the load (F) acting from the disk brake pad (10) on a ring-like element (30) of the disk (103), whose dimension in the radial direction of the disk (103) is a unit dimension, is constant regardless of the position of the ring-like element (30) in the radial direction of the disk (103) from the rotation centerline (C1) of the disk (103), and wherein the area of a lining member-side element (31) of the lining member (21), whose dimension in the radial direction of the disk (103) is a unit dimension, is proportional to the radial dimension (r) of the lining member-side element (31) from the rotation centerline (C1) of the disk (103).

6. The brake caliper device (1) according to claim 5, wherein the lining member (21; 40; 41; 42) is adapted to be disposed so as to spread out over a region enclosed by an outer circumferential arc (25) that is a portion of the lining member (21; 40; 41; 42) that extends in an arc-like manner along a circle centered about the rotational centerline and defines an outer edge portion in the radial direction of the disc (103), an inner circumferential arc (26) that is a portion of the lining member (21; 40; 41; 42) that extends in an arc-like manner along a circle centered about the rotational centerline and defines an inner edge portion in the radial direction of the disc (103), and a pair of straight lines (27a, 27b) that are portions of the lining member (21; 40; 41; 42) that define edge portions on both sides of the outer circumferential arc (25) and the inner circumferential arc (26) in a circumferential direction centered about the rotational centerline, and that extend linearly along the radial direction of the disc (103).

7. The brake caliper device (1) according to claim 6, wherein the load transfer portion (24a, 24b) is attached so as to be able to swing relative to the caliper body (11) via a swing shaft (16), and the swing shaft (16) is adapted to be disposed in the load transfer portion (24a, 24b) so as to, relative to the lining support portion (22), extend in a direction that passes through a load center position, which is where the center of the load that generates the surface pressure generated between the lining member (21; 40; 41; 42) and the frictional braking face (103a) acts, intersects a direction perpendicular to the frictional braking face (103a), is perpendicular to the radial direction of the disc (103), and is parallel with the frictional braking face (103a).

**Patentansprüche**

1. Scheibenbremsbelag (10), der in einer in einem Fahrzeug anzuordnenden Scheibenbremsvorrichtung (100) verwendet wird und der ausgelegt ist, um gegen eine Scheibe (103) gedrückt zu werden, die angeordnet ist, so dass sie sich zusammen mit entweder einer Achse oder einem Rad in dem Fahrzeug dreht, wobei der Scheibenbremsbelag (10) umfasst:

ein Auskleidungselement (21; 40; 41; 42; 43; 44), das ausgelegt ist, um gegen eine Reibungsbremsfläche (103a) der Scheibe (103) gedrückt zu werden; und

einen Auskleidungstragabschnitt (22), der ausgelegt ist, um das Auskleidungselement (21; 40; 41; 42; 43; 44) zu tragen, und der ausgelegt ist, um gehalten zu werden, so dass er in der Lage ist, relativ zu einem Sattelkörper (11) zu schwenken, der ausgelegt ist, um durch eine Bremszylindervorrichtung (101) der Scheibenbremsvorrichtung (100) angetrieben zu werden,

wobei der Auskleidungstragabschnitt (22) mit einem Basisabschnitt (23), der ausgelegt ist, um das Auskleidungselement (21; 40; 41; 42; 43; 44) zu tragen,

und einem Lastübertragungsabschnitt (24a, 24b) vorgesehen ist, der vorgesehen ist, um in dem Basisabschnitt (23) integriert oder daran befestigt zu sein, und ausgelegt ist, um eine Last von dem Sattelkörper (11) auf den Basisabschnitt (23) zu übertragen,

und wobei der Lastübertragungsabschnitt (24a, 24b) an einer Position auf dem Basisabschnitt (23) vorgesehen ist, an der eine Last, die einen Flächendruck erzeugt, der ein Flächendruck ist, der zwischen dem Auskleidungselement (21; 40; 41; 42; 43; 44) und der Reibungsbremsfläche (103a) erzeugt wird, wenn das Auskleidungselement (21; 40; 41; 42; 43; 44) gegen die Reibungsbremsfläche (103a) gedrückt wird, ausgelegt ist, um auf den Basisabschnitt (23) in einer derartigen Weise zu wirken, dass ein Betrag des Flächendrucks umgekehrt proportional zu einem Betrag eines Abstands von einer Position einer Drehmittellinie der Scheibe (103) in einer radialen Richtung der Scheibe (103) ist,

**dadurch gekennzeichnet, dass**

der Scheibenbremsbelag (10) derart eingerichtet ist, dass die Last (F), die von dem Scheibenbremsbelag (10) auf ein ringartiges Element (30) der Scheibe (103) wirkt, dessen Abmessung in der radialen Richtung der Scheibe (103) eine Abmessungseinheit ist, unabhängig von der Position des ringartigen Elements (30) in der radialen Richtung der Scheibe (103) von der Drehmittellinie (C1) der Scheibe (103) konstant ist, und wobei der Bereich eines auf der Seite des Auskleidungselements liegenden Elements (31) des Auskleidungselements (21),

dessen Abmessung in der radialen Richtung der Scheibe (103) eine Abmessungseinheit ist, proportional zu der radialen Abmessung (r) des auf der Seite des Auskleidungselements liegenden Elements (31) von der Drehmittellinie (C1) der Scheibe (103) ist.

2. Scheibenbremsbelag (10) nach Anspruch 1, wobei das Auskleidungselement (21; 40; 41; 42) ausgelegt ist, um angeordnet zu sein, so dass es sich über einen Bereich ausbreitet, der eingeschlossen ist durch: einen äußeren Umfangsbogen (25), der ein Abschnitt des Auskleidungselements (21; 40; 41; 42) ist, der sich in einer bogenartigen Weise entlang eines Kreises erstreckt, der um die Drehmittellinie zentriert ist, und einen äußeren Randabschnitt in der radialen Richtung der Scheibe (103) definiert, einen inneren Umfangsbogen (26), der ein Abschnitt des Auskleidungselements (21; 40; 41; 42) ist, der sich in einer bogenartigen Weise entlang eines Kreises erstreckt, der um die Drehmittellinie zentriert ist, und einen inneren Randabschnitt in der radialen Richtung der Scheibe (103) definiert, und ein Paar gerader Linien (27a, 27b), die Abschnitte des Auskleidungselements (21; 40; 41; 42) sind, die Randabschnitte auf beiden Seiten des äußeren Umfangsbogens (25) und des inneren Umfangsbogens (26) in einer Umfangsrichtung definieren, die um die Drehmittellinie zentriert sind und die sich linear entlang der radialen Richtung der Scheibe (103) erstrecken.

3. Scheibenbremsbelag (10) nach Anspruch 2, wobei der Lastübertragungsabschnitt (24a, 24b) ausgelegt ist, um angebracht zu sein, so dass er in der Lage ist, relativ zu dem Sattelkörper (11) über einen Schwenkschaft (16) zu schwenken, und wobei der Schwenkschaft (16) ausgelegt ist, um in dem Lastübertragungsabschnitt (24a, 24b) angeordnet zu sein, so dass er sich, relativ zu dem Auskleidungstragabschnitt (22), in einer Richtung erstreckt, die durch eine Lastmittenposition verläuft, die sich dort befindet, wo die Mitte der Last wirkt, die den Flächendruck erzeugt, der zwischen dem Auskleidungselement (21; 40; 41; 42) und der Reibungsbremsfläche (103a) erzeugt wird, eine Richtung senkrecht zu der Reibungsbremsfläche (103a) schneidet, senkrecht zu der radialen Richtung der Scheibe (103) sowie parallel zu der Reibungsbremsfläche (103a) ist.

4. Scheibenbremsbelag (10) nach einem der Ansprüche 1 bis 3, wobei das Auskleidungselement (40; 41; 42) in einem geteilten Zustand eingerichtet ist und mehrere geteilte Auskleidungselemente (40a, 40b, 40c; 41a, 41b, 41c, 41d; 42a) aufweist, die jeweils auf dem Auskleidungstragabschnitt (22) getragen sind.

5. Bremssattelvorrichtung (1), die in einer in einem Fahrzeug anzuordnenden Scheibenbremsvorrichtung (100) verwendet wird und die ausgelegt ist, um einen Scheibenbremsbelag (10) gegen eine Scheibe (103) zu drücken, die angeordnet ist, um sich zusammen mit entweder einer Achse oder einem Rad in dem Fahrzeug zu drehen, wobei die Bremssattelvorrichtung (1) umfasst:

einen Sattelkörper (11), der mit einer Bremszylindervorrichtung (101) in der Scheibenbremsvorrichtung (100) versehen ist, der anzubringen ist, so dass er in der Lage ist, sich in einer Fahrzeugrolldrehrichtung relativ zu dem Fahrzeug zu drehen,

und der eine Bremskraft erzeugt, indem er die Scheibe (103) mit einem Paar der Scheibenbremsbeläge (10) sandwichartig einschließt, indem er durch die Bremszylindervorrichtung (101) angetrieben wird; und

das Paar Scheibenbremsbeläge (10), die an dem Sattelkörper (11) angebracht sind,

wobei die Scheibenbremsbeläge (10) jeweils ein Auskleidungselement (21; 40; 41; 42; 43; 44), das ausgelegt ist, um gegen die Reibungsbremsfläche (103a) der Scheibe (103) gedrückt zu werden, und einen Auskleidungstragabschnitt (22), der ausgelegt ist, um das Auskleidungselement (21; 40; 41; 42; 43; 44) zu tragen, und der ausgelegt ist, um gehalten zu werden, so dass er in der Lage ist, relativ zu dem Sattelkörper (11) zu schwenken, aufweist,

wobei der Auskleidungstragabschnitt (22) mit einem Basisabschnitt (23), der ausgelegt ist, um das Auskleidungselement (21; 40; 41; 42; 43; 44) zu tragen, und einem Lastübertragungsabschnitt (24a, 24b) vorgesehen ist, der vorgesehen ist, um in dem Basisabschnitt (23) integriert oder daran befestigt zu sein, und ausgelegt ist, um eine Last von dem Sattelkörper (11) auf den Basisabschnitt (23) zu übertragen,

und wobei der Lastübertragungsabschnitt (24a, 24b) an einer Position auf dem Basisabschnitt (23) vorgesehen ist, an der eine Last, die einen Flächendruck erzeugt, welcher ein Flächendruck ist, der zwischen dem Auskleidungselement (21; 40; 41; 42; 43; 44) und der Reibungsbremsfläche (103a) erzeugt wird, wenn das Auskleidungselement (21; 40; 41; 42; 43; 44) gegen die Reibungsbremsfläche (103a) gedrückt wird, ausgelegt ist, um auf den Basisabschnitt (23) in einer derartigen Weise zu wirken, dass ein Betrag des Flächendrucks umgekehrt proportional zu einem Betrag eines Abstands von einer Position einer Drehmittellinie der Scheibe (103) in einer radialen Richtung der Scheibe (103) ist,

**dadurch gekennzeichnet, dass**

die Last (F), die von dem Scheibenbremsbelag (10) auf ein ringartiges Element (30) der Scheibe (103) wirkt, dessen Abmessung in der radialen Richtung der Scheibe (103) eine Abmessungseinheit ist, unabhängig von der Position des ringartigen Elements (30) in der radialen Richtung der Scheibe (103) von der Drehmittellinie (C1) der Scheibe (103) konstant ist, und wobei

der Bereich eines auf der Seite des Auskleidungselements liegenden Elements (31) des Auskleidungselements (21),

dessen Abmessung in der radialen Richtung der Scheibe (103) eine Abmessungseinheit ist, proportional zu der radialen Abmessung (r) des auf der Seite des Auskleidungselements liegenden Elements (31) von der Drehmittellinie (C1) der Scheibe (103) ist.

6. Bremssattelvorrichtung (1) nach Anspruch 5, wobei das Auskleidungselement (21; 40; 41; 42) ausgelegt ist, um angeordnet zu sein, so dass es sich über einen Bereich ausbreitet, der durch einen äußeren Umfangsbogen (25), der ein Abschnitt des Auskleidungselements (21; 40; 41; 42) ist, der sich in einer bogenartigen Weise entlang eines Kreises erstreckt, der um die Drehmittellinie zentriert ist, und einen äußeren Randabschnitt in der radialen Richtung der Scheibe (103) definiert, einen inneren Umfangsbogen (26), der ein Abschnitt des Auskleidungselements (21; 40; 41; 42) ist, der sich in einer bogenartigen Weise entlang eines Kreises erstreckt, der um die Drehmittellinie zentriert ist, und einen inneren Randabschnitt in der radialen Richtung der Scheibe (103) definiert, und ein Paar gerader Linien (27a, 27b), die Abschnitte des Auskleidungselements (21; 40; 41; 42) sind, die Randabschnitte auf beiden Seiten des äußeren Umfangsbogens (25) und des inneren Umfangsbogens (26) in einer Umfangsrichtung definieren, die um die Drehmittellinie zentriert sind und die sich linear entlang der radialen Richtung der Scheibe (103) erstrecken, eingeschlossen ist.

7. Bremssattelvorrichtung (1) nach Anspruch 6, wobei der Lastübertragungsabschnitt (24a, 24b) angebracht ist, so dass er in der Lage ist, relativ zu dem Sattelkörper (11) über einen Schwenkschaft (16) zu schwenken, und wobei der Schwenkschaft (16) ausgelegt ist, um in dem Lastübertragungsabschnitt (24a, 24b) angeordnet zu sein, so dass er sich, relativ zu dem Auskleidungstragabschnitt (22), in einer Richtung erstreckt, die durch eine Lastmittenposition verläuft, die sich dort befindet, wo die Mitte der Last wirkt, die den Flächendruck erzeugt, der zwischen dem Auskleidungselement (21; 40; 41; 42) und der Reibungsbremsfläche (103a) erzeugt wird, eine Richtung senkrecht zu der Reibungsbremsfläche (103a) schneidet, senkrecht zu der radialen Richtung der Scheibe (103) sowie parallel zu der Reibungsbremsfläche (103a) ist.

## Revendications

1. Plaquette de frein à disque (10) qui est utilisée dans un dispositif de frein à disque (100) devant être disposé dans un véhicule, et qui est conçue pour être pressée contre un disque (103) disposé de manière à tourner avec l'un d'un essieu et d'une roue dans le véhicule, la plaquette de frein à disque (10) comprenant :

un élément de garniture (21; 40; 41; 42; 43; 44) qui est conçu pour être pressé contre une face de freinage par frottement (103a) du disque (103) ; et

une partie de support de garniture (22) qui est conçue pour supporter l'élément de garniture (21; 40; 41; 42; 43; 44) et est conçue pour être maintenue de manière à pouvoir osciller par rapport à un corps d'étrier (11) qui est conçu pour être entraîné par un dispositif de cylindre de frein (101) du dispositif de frein à disque (100),

dans lequel la partie de support de garniture (22) est pourvue d'une partie de base (23) qui est conçue pour supporter l'élément de garniture (21; 40; 41; 42; 43; 44), et une partie de transfert de charge (24a, 24b) qui est prévue pour être intégrée ou fixée à la partie de base (23) et est conçue pour transférer une charge du corps d'étrier (11) à la partie de base (23),

et la partie de transfert de charge (24a, 24b) est prévue à une position sur la partie de base (23) à laquelle une charge qui génère une pression de surface, qui est une pression de surface générée entre l'élément de garniture (21; 40; 41; 42; 43; 44) et la face de freinage par frottement (103a) lorsque l'élément de garniture (21; 40; 41; 42; 43; 44) est pressé contre la face de freinage par frottement (103a), est conçue pour agir sur la partie de base (23) de telle manière qu'une amplitude de la pression de surface est inversement proportionnelle à une amplitude d'une distance par rapport à une position d'un axe de rotation du disque (103) dans une direction radiale du disque (103), **caractérisée en ce que**

la plaquette de frein à disque (10) est configurée de telle sorte que la charge (F) agissant à partir de la plaquette de frein à disque (10) sur un élément annulaire (30) du disque (103), dont la dimension dans la direction radiale du disque (103) est une dimension unitaire, est constante quelle que soit la position de l'élément annulaire (30) dans la direction radiale du disque (103) par rapport à l'axe de rotation (C1) du disque (103), et dans laquelle la surface d'un élément latéral d'élément de garniture (31) de l'élément de garniture (21), dont la dimension dans la direction radiale du disque (103) est une dimension unitaire, est proportionnelle à la dimension radiale (r) de l'élément latéral d'élément de garniture (31) par rapport à l'axe de rotation (C1) du disque (103).

2.  Plaquette de frein à disque (10) selon la revendication 1, dans laquelle l'élément de garniture (21; 40; 41; 42) est conçu pour être disposé de manière à s'étendre sur une région délimitée par : un arc circonférentiel extérieur (25) qui est une partie de l'élément de garniture (21; 40; 41; 42) qui s'étend en forme d'arc le long d'un cercle centré sur l'axe de rotation et définit une partie de bord extérieur dans la direction radiale du disque (103), un arc circonférentiel intérieur (26) qui est une partie de l'élément de garniture (21; 40; 41; 42) qui s'étend en forme d'arc le long d'un cercle centré sur l'axe de rotation et définit une partie de bord intérieur dans la direction radiale du disque (103), et une paire de lignes droites (27a, 27b) qui sont des parties de l'élément de garniture (21; 40; 41; 42) qui définissent des parties de bord sur les deux côtés de l'arc circonférentiel extérieur (25) et de l'arc circonférentiel intérieur (26) dans une direction circonférentielle centrée sur l'axe de rotation, et qui s'étendent linéairement le long de la direction radiale du disque (103).

3.  Plaquette de frein à disque (10) selon la revendication 2, dans laquelle la partie de transfert de charge (24a, 24b) est conçue pour être fixée de manière à pouvoir osciller par rapport au corps d'étrier (11) par l'intermédiaire d'un arbre oscillant (16), et l'arbre oscillant (16) est conçu pour être disposé dans la partie de transfert de charge (24a, 24b) de manière à, par rapport à la partie de support de garniture (22), s'étendre dans une direction qui passe par une position de centre de charge, qui est l'endroit où le centre de la charge qui génère la pression de surface générée entre l'élément de garniture (21; 40; 41; 42) et la face de freinage par frottement (103a) agit, coupe une direction perpendiculaire à la face de freinage par frottement (103a), est perpendiculaire à la direction radiale du disque (103), et est parallèle à la face de freinage par frottement (103a).

4.  Plaquette de frein à disque (10) selon l'une quelconque des revendications 1 à 3, dans laquelle l'élément de garniture (40; 41; 42) est configuré dans un état divisé et a une pluralité d'éléments de garniture divisés (40a, 40b, 40c; 41a, 41b, 41c, 41d; 42a) qui sont chacun supportés sur la partie de support de garniture (22).

5.  Dispositif d'étrier de frein (1) qui est utilisé dans un dispositif de frein à disque (100) devant être disposé dans un véhicule et qui est conçu pour presser une plaquette de frein à disque (10) contre un disque (103) disposé de manière à tourner avec l'un d'un essieu et d'une roue dans le véhicule, le dispositif d'étrier de frein (1) comprenant :

un corps d'étrier (11) qui est équipé d'un dispositif de cylindre de frein (101) dans le dispositif de frein à disque (100), doit être fixé de manière à pouvoir tourner dans une direction de rotation de roulement du véhicule par rapport au véhicule, et génère une force de freinage en prenant en sandwich le disque (103) avec une paire de plaquettes de frein à disque (10) du fait d'être entraîné par le dispositif de cylindre de frein (101); et
la paire de plaquettes de frein à disque (10) qui sont fixées au corps d'étrier (11),
dans lequel les plaquettes de frein à disque (10) ont chacune un élément de garniture (21; 40; 41; 42;43; 44) qui est conçu pour être pressé contre une face de freinage par frottement (103a) du disque (103), et une partie de support de garniture (22) qui est conçue pour supporter l'élément de garniture (21; 40; 41; 42; 43; 44) et est conçue pour être maintenue de manière à pouvoir osciller par rapport au corps d'étrier (11),
la partie de support de garniture (22) comporte une partie de base (23) conçue pour supporter l'élément de garniture (21; 40; 41; 42; 43; 44), et une partie de transfert de charge (24a, 24b) qui est prévue pour être intégrée ou fixée à la partie de base (23) et est conçue pour transférer une charge du corps d'étrier (11) à la partie de base (23),
et la partie de transfert de charge (24a, 24b) est prévue à une position sur la partie de base (23) à laquelle une charge qui génère une pression de surface, qui est une pression de surface générée entre l'élément de garniture (21; 40; 41; 42; 43; 44) et la face de freinage par frottement (103a) lorsque l'élément de garniture (21; 40; 41; 42; 43; 44) est pressé contre la face de freinage par frottement (103a), est conçue pour agir sur la partie de base (23) de telle manière qu'une amplitude de la pression de surface est inversement proportionnelle à une amplitude d'une distance par rapport à une position d'un axe de rotation du disque (103) dans une direction radiale du disque (103), **caractérisée en ce que**
la charge (F) agissant à partir de la plaquette de frein à disque (10) sur un élément annulaire (30) du disque (103), dont la dimension dans la direction radiale du disque (103) est une dimension unitaire, est constante quelle que soit la position de l'élément annulaire (30) dans la direction radiale du disque (103) par rapport à l'axe de rotation (C1) du disque (103), et dans laquelle
la surface d'un élément latéral d'élément de garniture (31) de l'élément de garniture (21), dont la dimension dans la direction radiale du disque (103) est une dimension unitaire, est proportionnelle à la dimension radiale (r) de l'élément latéral d'élément de garniture (31) par rapport à l'axe de rotation (C1) du disque (103).

6. Dispositif d'étrier de frein (1) selon la revendication 5, dans lequel l'élément de garniture (21; 40; 41; 42) est conçu pour être disposé de manière à s'étendre sur une région délimitée par un arc circonférentiel extérieur (25) qui est une partie de l'élément de garniture (21; 40; 41; 42) qui s'étend en forme d'arc le long d'un cercle centré sur l'axe de rotation et définit une partie de bord extérieur dans la direction radiale du disque (103), un arc circonférentiel intérieur (26) qui est une partie de l'élément de garniture (21; 40; 41; 42) qui s'étend en forme d'arc le long d'un cercle centré sur l'axe de rotation et définit une partie de bord intérieur dans la direction radiale du disque (103), et une paire de lignes droites (27a, 27b) qui sont des parties de l'élément de garniture (21; 40; 41; 42) qui définissent des parties de bord sur les deux côtés de l'arc circonférentiel extérieur (25) et de l'arc circonférentiel intérieur (26) dans une direction circonférentielle centrée sur l'axe de rotation, et qui s'étendent linéairement le long de la direction radiale du disque (103).

7. Dispositif d'étrier de frein (1) selon la revendication 6, dans laquelle la partie de transfert de charge (24a, 24b) est fixée de manière à pouvoir osciller par rapport au corps d'étrier (11) par l'intermédiaire d'un arbre oscillant (16), et l'arbre oscillant (16) est conçu pour être disposé dans la partie de transfert de charge (24a, 24b) de manière à, par rapport à la partie de support de garniture (22), s'étendre dans une direction qui passe par une position de centre de charge, qui est l'endroit où le centre de la charge qui génère la pression de surface générée entre l'élément de garniture (21; 40; 41; 42) et la face de freinage par frottement (103a) agit, coupe une direction perpendiculaire à la face de freinage par frottement (103a), est perpendiculaire à la direction radiale du disque (103), et est parallèle à la face de freinage par frottement (103a).

FIG. 1

FIG. 2

FIG. 3

FIG. 4

FIG. 5

FIG. 6

**FIG. 7**

FIG. 8

FIG. 9

FIG. 10

FIG. 11

**EP 2 662 586 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10507250 W

- US 4019608 A